# EUROPÄISCHE PATENTSCHRIFT

(11) **EP 3 469 881 B1**
(45) Veröffentlichungstag und Bekanntmachung des Hinweises auf die Patenterteilung: **21.02.2024**
(21) Anmeldenummer: 18183839.2
(22) Anmeldetag: 17.07.2018
(51) Int. Cl.: A01D 69/02, A01D 69/00, A01D 69/06

(54) **LANDWIRTSCHAFTLICHE ARBEITSMASCHINE**
AGRICULTURAL MACHINE
ENGIN AGRICOLE

(30) Priorität: 15.09.2017 DE 102017121517
(43) Veröffentlichungstag der Anmeldung: 17.04.2019
(73) Patentinhaber: CLAAS Selbstfahrende Erntemaschinen GmbH, 33428 Harsewinkel (DE)
(72) Erfinder: Bentfeld, Andreas, 33775 Versmold (DE); Horstkötter, Mark, 33442 Herzebrock-Clarholz (DE)
(74) Vertreter: CLAAS Gruppe

(56) Entgegenhaltungen:
- EP-A1- 0 291 336
- EP-A1- 1 946 631
- EP-A1- 2 789 222
- EP-A2- 2 546 420
- DE-A1- 2 418 685
- DE-A1- 3 702 095
- DE-A1-102010 047 233
- DE-A1-102010 053 267
- DE-A1-102015 216 497
- DE-C1- 3 330 311

## Beschreibung

Die vorliegende Erfindung betrifft eine landwirtschaftliche Arbeitsmaschine, insbesondere einen Traktor, Mähdrescher oder Feldhäcksler, gemäß dem Oberbegriff von Anspruch 1.

Grundsätzlich sind verschiedene landwirtschaftliche Arbeitsmaschinen aus dem Stand der Technik bekannt. Dies können landwirtschaftliche Zugmaschinen, wie beispielsweise Traktoren, oder landwirtschaftliche Erntemaschinen, wie beispielsweise Mähdrescher oder Feldhäcksler, sein. Diese weisen mehrere Arbeitsorgane und/oder Anbaugeräte zur Durchführung oder Unterstützung landwirtschaftlicher Arbeit auf. Verschiedene der Arbeitsorgane und/oder Anbaugeräte werden hydraulisch betätigt bzw. betrieben. Hydraulisch betätigbare Arbeitsorgane sind beispielsweise die Lenkeinrichtung der landwirtschaftlichen Arbeitsmaschine oder eine Hubeinrichtung für ein vorderes oder hinteres Anbaugerät, um nur einige Beispiele zu nennen. Diese hydraulisch betätigbaren Leistungsverbraucher werden über eine Fluidpumpe mit dem notwenigen hydraulischen Druck versorgt. Üblicherweise ist dabei jedem Leistungsverbraucher eine eigene Fluidpumpe zugeordnet, die von einem eigenen Nebenantrieb angetrieben wird. Mit einem Nebenantrieb ist ein Antrieb gemeint, der Teil eines Antriebsstrangs ist, der von dem Hauptantrieb bzw. der Hauptantriebswelle der Verbrennungskraftmaschine, die auch den Fahrantrieb antreibt, unabhängig ist. Die Nebenantriebe sind entweder vom Hauptantrieb abgezweigt oder stellen eigene Antriebe dar.

Aus der DE 10 2010 047 233 A1 ist eine landwirtschaftliche Arbeitsmaschine mit mehreren Leistungsverbrauchern bekannt, darunter eine Zapfwelle zum Betrieb von Anbaugeräten, sowie ein hydraulisch betätigbarer Nebenverbraucher, der über eine Hydraulikpumpe mit Druck versorgt wird. Beide Leistungsverbraucher werden von demselben Antrieb angetrieben, wobei die Leistungsübertragung von dem gemeinsamen Antrieb über eine gemeinsame mehrgliedrige Kette erfolgt. Über diesen Kettentrieb wird hier also ein mechanisch betätigbares Arbeitsorgan in Form der Zapfwelle bzw. des daran angeschlossenen Anbaugeräts und ein hydraulisch betätigbares Arbeitsorgan in Form des Nebenverbrauchers angetrieben. Unabhängig davon sind aus dem Stand der Technik Pumpenverteilergetriebe mit kämmenden Zahnrädern als Übertragungselemente bekannt.

Die Schriften EP 2 789 222 A1, EP 2 546 420 A2, EP 0 291 336 A1 und EP 1 946 631 A1 beschreiben weitere bekannte Arbeitsmaschinen,

Die bei landwirtschaftlichen Arbeitsmaschinen bekannten Verteilergetriebe auf Basis einer Drehmomentübertragung über Zahnräder oder über einen Kettentrieb benötigen aufwendige Schmiervorrichtungen und konstruktiv aufwendige Schutzgehäuse zum Schutz vor Verunreinigungen. Gegebenenfalls müssen auch Einrichtungen zur Kühlung der Komponenten eines solchen Verteilergetriebes vorgesehen werden. Dies wiederum führt zu erhöhten Herstellungs- und Betriebskosten.

Der Erfindung liegt das Problem zugrunde, eine einen mit Energie zu versorgenden Leistungsverbraucher aufweisende landwirtschaftliche Arbeitsmaschine derart auszugestalten und weiterzubilden, dass die Herstellungs- und/oder Betriebskosten verringert werden können.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass durch Vorsehen eines Verteilergetriebes, das auf einer Leistungsübertragung bzw. Drehmomentübertragung mittels Zahnriemen basiert, die Konstruktion des Verteilergetriebes vereinfacht werden kann. So kann gegenüber einem Zahnradverteilergetriebe oder einem Kettenverteilergetriebe auf ein Gehäuse, eine Schmiereinrichtung und eine Kühleinrichtung zumindest weitestgehend, insbesondere vollständig, verzichtet werden. So muss ein Zahnriemen nicht zwingend geschmiert oder gekühlt werden. Auch beeinflussen eventuelle Verunreinigungen aufgrund der elastischen Eigenschaften eines Zahnriemens im Vergleich zu einer Kette oder einem Zahnrad kaum die Drehmomentübertragung. Das Drehmomentspektrum, das ein Zahnriemenverteilergetriebe übertragen kann, ist trotzdem auf einem vergleichbaren Niveau wie das eines Zahnradverteilergetriebes und sogar wesentlich größer im Vergleich zu einem Kettenverteilergetriebe bei ähnlichen Raumabmessungen.

Nach der Ausgestaltung gemäß Anspruch 2 weist die vorschlagsgemäße landwirtschaftliche Arbeitsmaschine mehrere Arbeitsorgane und/oder mehrere Anbaugeräte auf, wobei das Verteilergetriebe die vom Antrieb erzeugte Antriebsleistung bzw. das vom Antrieb erzeugte Antriebsdrehmoment über einen einzelnen von gegebenenfalls mehreren Zahnriemen zumindest zu einem Teil zu mehreren Fluidpumpen und/oder Generatoren übertragen kann. Damit können über nur einen einzigen Zahnriemen mehrere Fluidpumpen und/oder Generatoren und entsprechend mehrere Leistungsverbraucher angetrieben bzw. betätigt werden. Erfindungsgemäß ist über ein und denselben Antrieb mehrere solcher Fluidpumpen und/oder Generatoren bzw. entsprechende Leistungsverbraucher über mehrere Zahnriemen anzutreiben.

Der jeweilige Zahnriemen kann dabei die Leistung bzw. das Drehmoment zu einer oder zu mehreren der Fluidpumpen und/oder Generatoren übertragen. Die Fluidpumpen und/oder Generatoren können durch das Verteilergetriebe entweder gleichzeitig oder zeitlich unabhängig voneinander angetrieben werden (Anspruch 3).

Die Ansprüche 4 und 5 definieren verschiedene Ausgestaltungen des Antriebs der landwirtschaftlichen Arbeitsmaschine. So kann der Antrieb einen Antriebsmotor, insbesondere eine Verbrennungskraftmaschine, und eine Antriebswelle zur Abgabe der gesamten Antriebsleistung an das Verteilergetriebe aufweisen. Somit gibt es hier vorzugsweise nur einen Hauptantrieb zum Antrieb der Fluidpumpen und/oder Generatoren bzw. hydraulischen und/oder elektrischen Leistungsverbraucher, so dass insbesondere keine Nebenantriebe vorgesehen sein müssen. Die Antriebswelle kann grundsätzlich entweder die Motorwelle oder eine Getriebeausgangswelle eines Zwischengetriebes sein, das optional zwischen Antriebsmotor und Antriebswelle geschaltet sein kann. In letzterem Fall wird die Antriebswelle also nicht von der Motorwelle, sondern von der Getriebeausgangswelle des Zwischengetriebes gebildet. Zwischen Antriebsmotor und Antriebswelle kann zusätzlich oder alternativ auch ein Schwingungsdämpfer angeordnet sein.

Die Ansprüche 6 bis 10 definieren verschiedene bevorzugte Ausgestaltungen des Verteilergetriebes, insbesondere der einzelnen Komponenten zur Übertragung der erzeugten Leistung bzw. des erzeugten Antriebsdrehmoments.

Anspruch 11 definiert mögliche Ausgestaltungen der Fluidpumpe bzw. der Fluidpumpen.

Nach der besonders bevorzugten Ausgestaltung gemäß Anspruch 12 weist der jeweilige Zahnriemen eine hitzeresistente Beschichtung auf. Diese ist insbesondere so gewählt, dass der jeweilige Zahnriemen Temperaturen von mehr als 70°C, bevorzugt von mehr als 80°C, besonders bevorzugt von mehr als 90°C, Stand hält.

Nach der Ausgestaltung gemäß Anspruch 13 weist die landwirtschaftliche Arbeitsmaschine ferner eine Steuereinrichtung auf, die konfiguriert ist, zur Steuerung von und/oder zur Kommunikation mit dem mindestens einen Arbeitsorgan und/oder Anbaugerät, mit der bzw. dem dem jeweiligen Arbeitsorgan und/oder Anbaugerät zugeordneten Fluidpumpe und/oder Generator und/oder mit dem Antrieb.

Anspruch 14 definiert schließlich einige bevorzugte Leistungsverbraucher der Leistungsverbraucheranordnung, die mittels einer zugeordneten Fluidpumpe über die gemeinsame Antriebsanordnung mit dem benötigten Fluiddruck versorgt werden können.

Im Folgenden wird die Erfindung anhand einer lediglich Ausführungsbeispiele darstellenden Zeichnung näher erläutert. In der Zeichnung zeigt
- Fig. 1: eine vorschlagsgemäße landwirtschaftliche Arbeitsmaschine in einer schematischen Seitenansicht und
- Fig. 2: eine schematische Darstellung des Funktionsprinzips der landwirtschaftlichen Arbeitsmaschine aus Fig. 1.

Die vorschlagsgemäße Lösung lässt sich auf einen weiten Bereich landwirtschaftlicher Arbeitsmaschinen, insbesondere selbstfahrender landwirtschaftlicher Arbeitsmaschinen anwenden. Dazu gehören Zugmaschinen, insbesondere Traktoren, und Erntemaschinen, insbesondere Mähdrescher, Feldhäcksler oder dergleichen. Bei dem dargestellten und insoweit bevorzugten Ausführungsbeispiel handelt es sich bei der landwirtschaftlichen Arbeitsmaschine 1 um einen Mähdrescher, der in an sich üblicher Weise mehrere elektrisch betätigbare oder, wie im Folgenden beispielhaft beschrieben wird, hydraulisch betätigbare Arbeitsorgane 2, 3, 4, 5 und/oder mindestens ein elektrisch oder hydraulisch betätigbares Anbaugerät zur Durchführung oder Unterstützung landwirtschaftlicher Arbeit als Leistungsverbraucher 6 aufweist. Die Leistungsverbraucher 6 bilden hier zusammen eine erste Leistungsverbraucheranordnung 7 der landwirtschaftlichen Arbeitsmaschine 1.

Nur beispielhaft seien hier als hydraulisch betätigbare Arbeitsorgane 2, 3, 4, 5 eine Lenkeinrichtung 2 zum Lenken der landwirtschaftlichen Arbeitsmaschine 1, eine Hubeinrichtung 3 für einen Messerbalken 8 eines Schneidwerks 9, eine Hubeinrichtung 4 für das Schneidwerk 9, eine Siebeinrichtung 5 zum Trennen von Korn- und Nichtkornbestandteilen eines Erntegutstroms sowie ein Kühlerlüfter genannt. Auch ein geschlossener Hydraulikkreis mit einer entsprechenden Leistungshydraulikpumpe ist denkbar.

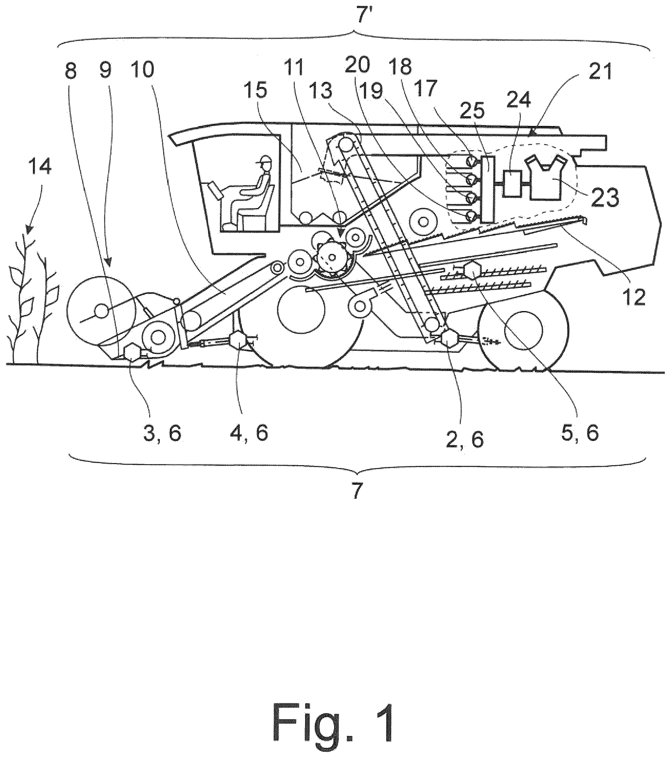

Zusätzlich kann die vorschlagsgemäße landwirtschaftliche Arbeitsmaschine 1 auch noch weitere Arbeitsorgane, insbesondere mechanisch betätigbare und entsprechend nicht-hydraulisch und nicht-elektrisch betätigbare Arbeitsorgane 9, 10, 11, 12, 13 aufweisen, die eine zweite Leistungsverbraucheranordnung 7' bilden. Bei dem in Fig. 1 beispielhaft dargestellten Mähdrescher 1 seien diesbezüglich beispielsweise das Schneidwerk 9 zum Abschneiden des Ernteguts 14, ein nachgeordneter Schrägförderer 10 zum Transportieren des abgeschnittenen Ernteguts 14, eine wiederum nachgeschaltete Drescheinrichtung 11 zum Entkörnen des aufgenommenen Ernteguts 14, eine Trenneinrichtung 12 zum Trennen von Stroh- und Kornbestandteilen sowie ein Kornelevator 13 zum Transport des mittels der Trenneinrichtung 12 und der nachgeordneten Siebeinrichtung 5 separierten Kornanteils in einen Korntank 15 genannt.

Die landwirtschaftliche Arbeitsmaschine 1 weist ferner eine Energieversorgungsanordnung 16, hier und vorzugsweise eine Druckversorgungsanordnung 16, für die Leistungsverbraucher 6 der ersten Leistungsverbraucheranordnung 7 auf, das heißt hier für die Arbeitsorgane 2, 3, 4, 5. Die Energieversorgungsanordnung16 umfasst mindestens eine Fluidpumpe 17, 18, 19, 20, hier und vorzugsweise vier separate Fluidpumpen 17, 18, 19, 20, die dem jeweiligen, hier hydraulisch betriebenen Leistungsverbraucher 6 zugeordnet ist bzw. sind und zur Druckversorgung desselben konfiguriert ist bzw. sind. Die Energieversorgungsanordnung 16 kann auch zusätzlich oder alternativ mindestens einen Generator zur Erzeugung elektrischer Energie aufweisen, der einem entsprechend elektrische betriebenen Leistungsverbraucher 6 zugeordnet ist bzw. sind und zur elektrischen Versorgung desselben konfiguriert ist bzw. sind.

Bei den Fluidpumpen 17, 18, 19, 20 handelt es sich hier jeweils um Hydraulikpumpen. Eine erste Fluidpumpe 17 ist hier der Lenkeinrichtung 2 zugeordnet. Eine zweite Fluidpumpe 18 ist hier der Hubeinrichtung 3 für den Messerbalken 8 zugeordnet. Eine dritte Fluidpumpe 19 ist hier der Hubeinrichtung 4 für das Schneidwerk 9 zugeordnet. Eine vierte Fluidpumpe 20 ist hier schließlich der Siebeinrichtung 5 zugeordnet. Der Vollständigkeit halber sei angemerkt, dass grundsätzlich auch denkbar ist, dass eine oder mehrere der Fluidpumpen pneumatische Fluidpumpen sind.

Zum Antrieb all der Fluidpumpen 17, 18, 19, 20 und/oder Generatoren der ersten Leistungsverbraucheranordnung 7 und dadurch Betätigung der Leistungsverbraucher 6 der Leistungsverbraucheranordnung 7 weist die vorschlagsgemäße landwirtschaftliche Arbeitsmaschine 1 ferner eine Antriebsanordnung 21 auf. Die Antriebsanordnung 21 umfasst einen Antrieb 22, der hier und vorzugsweise einen Antriebsmotor 23, beispielsweise eine Verbrennungskraftmaschine, sowie ein Zwischengetriebe 24 aufweist. Ferner umfasst die Antriebsanordnung 21 ein Verteilergetriebe 25, das dem Antrieb 22 antriebstechnisch nachgeschaltet ist und die vom Antrieb 22 erzeugte Antriebsleistung bzw. das vom Antrieb 22 erzeugte Antriebsdrehmoment zumindest zu einem Teil zu den Fluidpumpen 17, 18, 19, 20 überträgt. Ein Teil der Antriebsleistung bzw. des Antriebsdrehmoments kann auch dem Fahrantrieb der landwirtschaftlichen Arbeitsmaschine 1 zugeführt werden (hier nicht dargestellt).

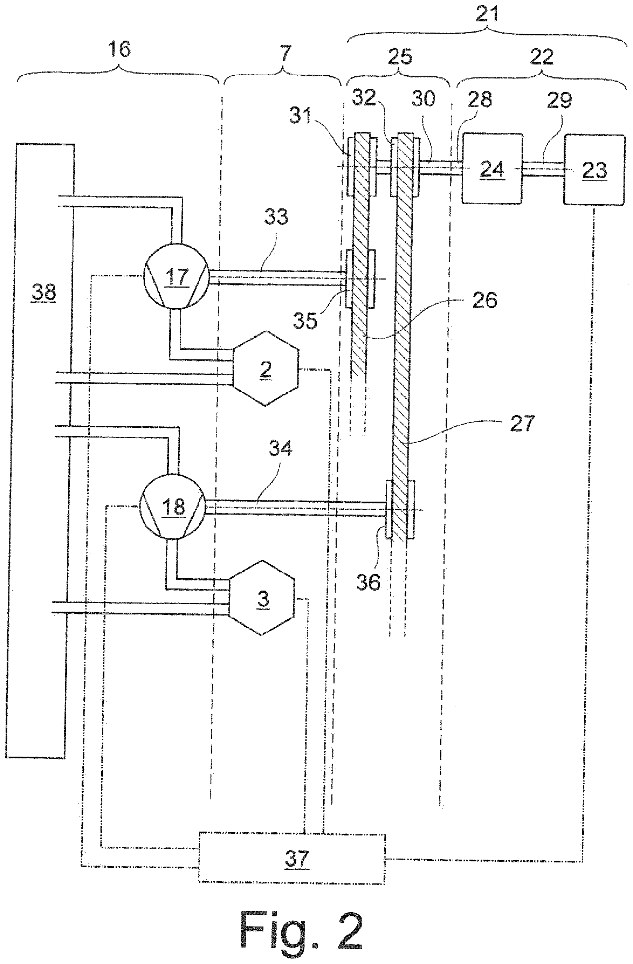

In Fig. 2 ist schematisch dargestellt, wie die einzelnen Komponenten der Leistungsverbraucheranordnung 7, der Energie- bzw. Druckversorgungsanordnung 16 und der Antriebsanordnung 21 miteinander zusammenwirken. Der Übersichtlichkeit halber sind hier allerdings nur einzelne Teile der Leistungsverbraucheranordnung 7 und der Druckversorgungsanordnung 16 dargestellt. Insbesondere zeigt Fig. 2 beispielhaft nur die Lenkeinrichtung 2 mit zugeordneter Fluidpumpe 17 und die Hubeinrichtung 3 für den Messerbalken 8 mit zugeordneter Fluidpumpe 18. Die weiteren Ausführungen zum grundsätzlichen Funktionsprinzip gelten aber gleichermaßen auch für die weiteren hydraulisch betätigbaren Arbeitsorgane 4, 5 und jeweils zugeordneten Fluidpumpen 19, 20.

Wesentlich bei der vorschlagsgemäßen Lösung ist nun, dass das Verteilergetriebe 25 mindestens einen Zahnriemen 26, 27, hier und vorzugsweise zwei Zahnriemen 26, 27, zur Leistungsübertragung bzw. Drehmomentübertragung aufweist. Die Verwendung eines oder mehrerer Zahnriemen 26, 27 hat zunächst den Vorteil, dass aufwendige Schmiervorrichtungen und Schutzgehäuse zum Schutz vor Verunreinigungen, wie diese bei Verteilergetrieben mit Zahnrädern verwendet werden, nicht notwendig sind. Auch eine separate Kühlung von Übertragungselementen des Verteilergetriebes ist bei der Verwendung von Zahnriemen 26, 27 nicht zwingend erforderlich, insbesondere dann, wenn es sich wie hier und vorzugsweise bei den Zahnriemen 26, 27 um hitzeresistent beschichtete und/oder aus hitzebeständigem Material bestehende Zahnriemen handelt, die Temperaturen von durchaus 90°C und mehr Stand halten. Der Kostenvorteil im Vergleich zu einem Zahnradverteilergetriebe, aber auch zu einem Kettenverteilergetriebe, ist dadurch erheblich. Die vorschlagsgemäße Lösung zeichnet sich auch dadurch aus, dass sie an Bestandsmaschinen und Marktmaschinen ohne Weiteres nachrüstbar ist und bisherige Zahnradverteilergetriebe oder Kettenverteilergetriebe ersetzen kann oder Erweiterungsmöglichkeiten zum Antrieb einzelner oder mehrerer Fluidpumpen und/oder Generatoren schafft. Zu diesem Zweck hat das vorschlagsgemäß verwendete Verteilergetriebe 25 bevorzugt einen schraubbaren Aufbau.

In Fig. 2 ist schematisch durch die gestrichelte Verlängerung der Zahnriemen 26, 27 symbolisiert, dass die Zahnriemen 26, 27 noch weiter als in Fig. 2 dargestellt verlaufen können. Beispielsweise kann über den Zahnriemen 26 neben der Fluidpumpe 17 auch noch die Fluidpumpe 20 der Siebeinrichtung 5 angetrieben werden. Entsprechend ist es denkbar, dass über den zweiten Zahnriemen 27 neben der Fluidpumpe 18 auch noch die Fluidpumpe 19 für die Hubeinrichtung 4 des Schneidwerks 9 angetrieben wird. Grundsätzlich sind aber auch beliebige andere Konstellationen denkbar. Alle Fluidpumpen 17, 18, 19, 20 sind hier mit einem gemeinsamen Fluidreservoir 38 fluidtechnisch verbunden.

Bei der hier beispielhaft dargestellten landwirtschaftlichen Arbeitsmaschine 1 sind jedenfalls mehrere Leistungsverbraucher 6 vorgesehen und das Verteilergetriebe 25 überträgt die vom Antrieb 22 erzeugte Antriebsleistung bzw. das vom Antrieb 22 erzeugte Drehmoment über den jeweiligen Zahnriemen 26, 27 zu einem Teil zu jeweils zwei der genannten Fluidpumpen, über den Zahnriemen 26 wie gesagt beispielsweise zu den Fluidpumpen 17 und 20 und über den Zahnriemen 27 beispielsweise zu den Fluidpumpen 18 und 19. Der Vollständigkeit halber sei darauf hingewiesen, dass grundsätzlich auch nur ein einzelner Zahnriemen vorgesehen sein kann oder aber auch mehr als die beiden Zahnriemen 26, 27 vorgesehen sein können, um entsprechende Fluidpumpen zu betätigen, die wiederum entsprechende hydraulisch betätigbare Arbeitsorgane bzw. Leistungsverbraucher mit dem notwendigen Fluiddruck versorgen. Allen Varianten ist jedoch gemein, dass die an die einzelnen Fluidpumpen bzw. Leistungsverbraucher übertragene Leistung von dem gemeinsamen Antrieb 22, der hier den Hauptantrieb bildet, und insbesondere dem gemeinsamen Motor 23 erzeugt wird.

Das Verteilergetriebe 25 ist hier und vorzugsweise so konfiguriert, dass es mindestens zwei Fluidpumpen gleichzeitig antreiben kann, nämlich über den Zahnriemen 26 die Fluidpumpe 17 und über den Zahnriemen 27 die Fluidpumpe 18. Grundsätzlich können auch die in Fig. 2 nicht dargestellten, weiteren Fluidpumpen 19 und 20 gleichzeitig angetrieben werden. Grundsätzlich ist es aber auch denkbar, dass einzelne der Fluidpumpen nur zeitlich unabhängig voneinander angetrieben werden können. Besonders bevorzugt kann das Verteilergetriebe 25 aber auch umgeschaltet werden, derart, dass in einem Fall je Zahnriemen 26, 27 nur eine erste der Fluidpumpen, in einem anderen Fall nur eine zweite der Fluidpumpen und/oder in einem anderen Fall mehrere Fluidpumpen gleichzeitig angetrieben werden kann bzw. können.

Der in den Fig. 1 und 2 dargestellte Antrieb 21 weist wie gesagt hier und vorzugsweise neben dem Antriebsmotor 23 noch ein Zwischengetriebe 24 auf, so dass die Getriebeausgangswelle 28 und nicht die Motorwelle 29 die Antriebswelle 30 bildet, die hier die Leistung bzw. das Antriebsdrehmoment am Ausgang des Antriebs 22 auf die Zahnriemen 26 und 27 überträgt. Grundsätzlich ist es aber auch denkbar, auf ein Zwischengetriebe zu verzichten, wobei dann die Motorwelle 29 die Antriebswelle 30 bilden würde. Zwischen Antriebsmotor 23 und Antriebswelle 30 kann zusätzlich oder alternativ auch ein Schwingungsdämpfer angeordnet sein.

Das Verteilergetriebe 25 weist hier und vorzugsweise je Zahnriemen 26, 27 eine antreibende Zahnriemenscheibe 31, 32 auf, wobei es grundsätzlich aber auch in einer anderen Variante denkbar wäre, das über eine gemeinsame antreibende Zahnriemenscheibe mehrere Zahnriemen angetrieben werden. Die jeweilige antreibende Zahnriemenscheibe 31, 32 ist hier drehfest mit der Antriebswelle 30 gekoppelt. Ferner weist das Verteilergetriebe 25 hier und vorzugsweise je Fluidpumpe 17, 18, 19, 20 eine diese betreibende Abtriebswelle, von denen in Fig. 2 nur die Abtriebswellen 33 und 34 dargestellt sind, auf, wobei mit jeder dieser Abtriebswellen 33, 34 jeweils mindestens eine abtreibende Zahnriemenscheibe 35, 36, drehfest gekoppelt ist. Hier und vorzugsweise sind über die einzige Antriebswelle 30 mehrere Abtriebswellen 33, 34, hier und vorzugsweise vier Abtriebswellen, von denen nur zwei Abtriebswellen 33, 34 dargestellt sind, und entsprechende Fluidpumpen 17, 18, 19, 20 antreibbar.

Die Zahnriemenscheiben 31, 32, die mit der Antriebswelle 30 drehfest gekoppelt sind, und/oder einzelne oder alle Zahnriemenscheiben 35, 36, die mit der bzw. den Abtriebswellen 33, 34 drehfest gekoppelt sind, können unterschiedliche Durchmesser aufweisen. Durch unterschiedliche Durchmesser können unterschiedliche Übersetzungsverhältnisse mit geringem Aufwand umgesetzt werden. Ein weiterer Vorteil ist, dass auch bei Antriebs- bzw. Drehzahlkonzepten mit vergleichsweise niedrigen Antriebsdrehzahlen dennoch günstige Fluidpumpen mit kleinem Schluckvolumen verwendet werden können, da auf einfache Weise, auch nachträglich, hohe Übersetzungsverhältnisse über solche Zahnriemenscheiben unterschiedlichen Durchmessers realisiert werden können.

Vorzugsweise sind einzelne oder alle Zahnriemenscheiben 31, 32, 35, 36 auch austauschbar gegen Zahnriemenscheiben anderer Durchmesser, so dass die Wahl verschiedener Übersetzungsverhältnisse relativ frei ist. So sind bei der Verwendung von Zahnriemen und Zahnriemenscheiben ausschließlich die Zahnriemenscheibendurchmesser maßgebend für die Übersetzungsverhältnisse und nicht, wie bei kämmenden Zahnrädern auch deren Achsabstände. Bevorzugt ist daher das Verteilergetriebe 25 im Bereich von der Antriebswelle 30 zu der oder den Fluidpumpen 17, 18, 19, 20 frei von miteinander kämmenden Zahnrädern. Auch Ketten werden bevorzugt nicht eingesetzt, um die Leistung bzw. das Drehmoment zu übertragen.

Schließlich weist die vorschlagsgemäße landwirtschaftliche Arbeitsmaschine 1 auch eine Steuereinrichtung 27 auf, die hier und vorzugsweise konfiguriert ist zur Steuerung von und/oder zur Kommunikation mit den Leistungsverbrauchern 6, mit den dem jeweiligen Leistungsverbraucher 6 zugeordneten Fluidpumpen 17, 18, 19, 20 bzw. Generatoren und/oder mit dem Antrieb 22, insbesondere dem Motor 23 und/oder dem Zwischengetriebe 24.

### Bezugszeichenliste

- 1: Landwirtschaftliche Arbeitsmaschine
- 2: Lenkeinrichtung
- 3: Hubeinrichtung für Messerbalken
- 4: Hubeinrichtung für Schneidwerk
- 5: Siebeinrichtung
- 6: Leistungsverbraucher
- 7: Erste Leistungsverbraucheranordnung
- 7': Zweite Leistungsverbraucheranordnung
- 8: Messerbalken
- 9: Schneidwerk
- 10: Schrägförderer
- 11: Drescheinrichtung
- 12: Trenneinrichtung
- 13: Kornelevator
- 14: Erntegut
- 15: Korntank
- 16: Energieversorgungsanordnung
- 17: Fluidpumpe
- 18: Fluidpumpe
- 19: Fluidpumpe
- 20: Fluidpumpe
- 21: Antriebsanordnung
- 22: Antrieb
- 23: Antriebsmotor
- 24: Zwischengetriebe
- 25: Verteilergetriebe
- 26: Zahnriemen
- 27: Zahnriemen
- 28: Getriebeausgangswelle
- 29: Motorwelle
- 30: Antriebswelle
- 31: Antreibende Zahnriemenscheibe
- 32: Antreibende Zahnriemenscheibe
- 33: Abtriebswelle
- 34: Abtriebswelle
- 35: Abtreibende Zahnriemenscheibe
- 36: Abtreibende Zahnriemenscheibe
- 37: Steuereinrichtung
- 38: Fluidreservoir

## Patentansprüche

1. Landwirtschaftliche Arbeitsmaschine, insbesondere Traktor, Mähdrescher oder Feldhäcksler, mit einer Leistungsverbraucheranordnung (7) umfassend mindestens ein Arbeitsorgan (2, 3, 4, 5) und/oder mindestens ein Anbaugerät als Leistungsverbraucher (6), mit einer Energieversorgungsanordnung (16) umfassend mindestens eine Fluidpumpe (17, 18, 19, 20) und/oder mindestens einen Generator, die/der dem jeweiligen Leistungsverbraucher (6) zugeordnet ist und zur Druck- oder Stromversorgung desselben konfiguriert ist, und mit einer Antriebsanordnung (21) umfassend einen Antrieb (22) und ein Verteilergetriebe (25), das dem Antrieb (22) antriebstechnisch nachgeschaltet ist und die vom Antrieb (22) erzeugte Antriebsleistung zumindest zu einem Teil zu der mindestens einen Fluidpumpe (17, 18, 19, 20) und/oder dem mindestens einen Generator überträgt,
**dadurch gekennzeichnet,**
**dass** das Verteilergetriebe (25) Zahnriemen (26, 27) zur Leistungsübertragung aufweist, wobei mehrere Leistungsverbraucher (6) vorgesehen sind und das Verteilergetriebe (25) die vom Antrieb (22) erzeugte Antriebsleistung über mindestens zwei unterschiedliche der Zahnriemen (26, 27) zumindest zu einem Teil zu jeweils mindestens einer der Fluidpumpen (17, 18, 19, 20) und/oder einem der Generatoren überträgt.

2. Landwirtschaftliche Arbeitsmaschine nach Anspruch 1, **dadurch gekennzeichnet, dass** mehrere Leistungsverbraucher (6) vorgesehen sind und das Verteilergetriebe (25) die vom Antrieb (22) erzeugte Antriebsleistung über den Zahnriemen (26, 27) oder jeweils einen der Zahnriemen (26, 27) zumindest zu einem Teil zu mindestens zwei der Fluidpumpen (17, 18, 19, 20) und/oder Generatoren übertragen kann.

3. Landwirtschaftliche Arbeitsmaschine nach Anspruch 1 oder 2, **dadurch gekennzeichnet, dass** das Verteilergetriebe (25) konfiguriert ist, die mindestens zwei Fluidpumpen (17, 18, 19, 20) und/oder Generatoren gleichzeitig oder zeitlich unabhängig voneinander anzutreiben.

4. Landwirtschaftliche Arbeitsmaschine nach einem der vorhergehenden Ansprüche, **dadurch gekennzeichnet, dass** der Antrieb (22) einen Antriebsmotor (23) und eine Antriebswelle (30) zur Abgabe der gesamten Antriebsleistung an das Verteilergetriebe (25) aufweist.

5. Landwirtschaftliche Arbeitsmaschine nach einem der vorhergehenden Ansprüche, **dadurch gekennzeichnet, dass** der Antrieb (22) ein Zwischengetriebe (24) und/oder einen Schwingungsdämpfer aufweist, das/der zwischen Antriebsmotor (23) und Antriebswelle (30) geschaltet ist.

6. Landwirtschaftliche Arbeitsmaschine nach einem der vorhergehenden Ansprüche, **dadurch gekennzeichnet, dass** das Verteilergetriebe (25) je Zahnriemen (26, 27) eine antreibende Zahnriemenscheibe (31, 32) oder dass das Verteilergetriebe (25) eine antreibende Zahnriemenscheibe (31, 32) für mehrere Zahnriemen (26, 27) aufweist, wobei die jeweilige antreibende Zahnriemenscheibe (31, 32) drehfest mit der Antriebswelle (30) gekoppelt ist.

7. Landwirtschaftliche Arbeitsmaschine nach einem der vorhergehenden Ansprüche, **dadurch gekennzeichnet, dass** das Verteilergetriebe (25) je Fluidpumpe (17, 18, 19, 20) und/oder je Generator eine diese(n) betreibende Abtriebswelle (33, 34) und mindestens eine mit der Abtriebswelle (33, 34) drehfest gekoppelte abtreibende Zahnriemenscheibe (35, 36) aufweist.

8. Landwirtschaftliche Arbeitsmaschine nach einem der vorhergehenden Ansprüche, **dadurch gekennzeichnet, dass** über die Antriebswelle (30) mehrere Abtriebswellen (33, 34) und/oder Fluidpumpen (17, 18, 19, 20) und/oder Generatoren antreibbar sind.

9. Landwirtschaftliche Arbeitsmaschine nach einem der vorhergehenden Ansprüche, **dadurch gekennzeichnet, dass** mindestens zwei der Zahnriemenscheiben (31, 32), die mit der Antriebswelle (30) drehfest gekoppelt sind, und/oder mindestens zwei der Zahnriemenscheiben (35, 36), die mit der oder den Abtriebswelle(n) (33, 34) gekoppelt sind, unterschiedliche Durchmesser aufweisen.

10. Landwirtschaftliche Arbeitsmaschine nach einem der vorhergehenden Ansprüche, **dadurch gekennzeichnet, dass** das Verteilergetriebe (25) zur Leistungsübertragung von der Antriebswelle (30) zu der oder den Fluidpumpe(n) (17, 18, 19, 20) und/oder dem oder den Generator(en) frei von miteinander kämmenden Zahnrädern ist.

11. Landwirtschaftliche Arbeitsmaschine nach einem der vorhergehenden Ansprüche, **dadurch gekennzeichnet, dass** eine, mehrere oder alle Fluidpumpe(n) (17, 18, 19, 20) als hydraulische Pumpe(n) ausgebildet ist/sind.

12. Landwirtschaftliche Arbeitsmaschine nach einem der vorhergehenden Ansprüche, **dadurch gekennzeichnet, dass** der jeweilige Zahnriemen (26, 27) aus einem hitzebeständigen Material besteht und/oder eine hitzeresistente Beschichtung aufweist.

13. Landwirtschaftliche Arbeitsmaschine nach einem der vorhergehenden Ansprüche, **dadurch gekennzeichnet, dass** eine Steuereinrichtung (37) vorgesehen ist, die konfiguriert ist zur Steuerung von und/oder zur Kommunikation mit dem mindestens einen Leistungsverbraucher (6), mit der/dem dem jeweiligen Leistungsverbraucher (6) zugeordneten Fluidpumpe (17, 18, 19, 20) und/oder Generator und/oder mit dem Antrieb (22).

14. Landwirtschaftliche Arbeitsmaschine nach einem der vorhergehenden Ansprüche, **dadurch gekennzeichnet, dass** der mindestens eine Leistungsverbraucher (6) gewählt ist aus der Gruppe umfassend
- eine Lenkeinrichtung (2) zum Lenken der landwirtschaftlichen Arbeitsmaschine (1),
- eine Hubeinrichtung (3) zur Höhenverstellung eines Messerbalkens (8) eines Schneidwerks (9) der landwirtschaftlichen Arbeitsmaschine (1),
- eine Hubeinrichtung (4) zur Höhenverstellung eines Schneidwerks (9) der landwirtschaftlichen Arbeitsmaschine (1) und
- eine Siebeinrichtung (5) zum Trennen von Korn- und Nichtkornbestandteilen eines Erntegutstroms innerhalb der landwirtschaftlichen Arbeitsmaschine (1).

## Claims

1. Agricultural working machine, in particular a tractor, combine harvester or forage harvester, having a power consumer arrangement (7) comprising at least one working member (2, 3, 4, 5) and/or at least one mounted implement as power consumer (6), having a power supply arrangement (16) comprising at least one fluid pump (17, 18, 19, 20) and/or at least one generator which is configured to the respective power consumer (6) and is configured to pressurise or supply power to the same, and with a drive arrangement (21) comprising a drive (22) and a transfer gear (25) which is connected downstream of the drive (22) in terms of drive technology and transmits at least part of the drive power generated by the drive (22) to the at least one fluid pump (17, 18, 19, 20) and/or the at least one generator,
**characterised in that**
the transfer case (25) has toothed belts (26, 27) for transmitting power, a plurality of power consumers (6) being provided and the transfer case (25) transmitting at least some of the drive power generated by the drive (22) via at least two different of the toothed belts (26, 27) to at least one of the fluid pumps (17, 18, 19, 20) and/or one of the generators in each case.

2. Agricultural working machine according to claim 1, **characterised in that** a plurality of power consumers (6) are provided and the transfer case (25) can transmit the drive power generated by the drive (22) via the toothed belt (26, 27) or in each case one of the toothed belts (26, 27) at least in part to at least two of the fluid pumps (17, 18, 19, 20) and/or generators.

3. Agricultural working machine according to claim 1 or 2, **characterised in that** the transfer case (25) is configured to drive the at least two fluid pumps (17, 18, 19, 20) and/or generators simultaneously or independently of one another in terms of time.

4. Agricultural working machine according to one of the preceding claims, **characterised in that** the drive (22) has a drive motor (23) and a drive shaft (30) for delivering the entire drive power to the transfer case (25).

5. Agricultural working machine according to one of the preceding claims, **characterised in that** the drive (22) has an intermediate gear (24) and/or a vibration damper, which is connected between the drive motor (23) and the drive shaft (30).

6. Agricultural machine according to one of the preceding claims, **characterised in that** the transfer case (25) has one driving toothed belt pulley (31, 32) for each toothed belt (26, 27) or **in that** the transfer case (25) has one driving toothed belt pulley (31, 32) for a plurality of toothed belts (26, 27), the respective driving toothed belt pulley (31, 32) being coupled to the drive shaft (30) in a rotationally fixed manner.

7. Agricultural working machine according to one of the preceding claims, **characterised in that** the transfer case (25) has, for each fluid pump (17, 18, 19, 20) and/or for each generator, an output shaft (33, 34) driving the latter(s) and at least one driven toothed belt pulley (35, 36) coupled in a rotationally fixed manner to the output shaft (33, 34).

8. Agricultural working machine according to one of the preceding claims, **characterised in that** a plurality of output shafts (33, 34) and/or fluid pumps (17, 18, 19, 20) and/or generators can be driven via the drive shaft (30).

9. Agricultural working machine according to one of the preceding claims, **characterised in that** at least two of the toothed belt pulleys (31, 32), which are coupled to the drive shaft (30) in a rotationally fixed manner, and/or at least two of the toothed belt pulleys (35, 36), which are coupled to the output shaft(s) (33, 34), have different diameters.

10. Agricultural working machine according to one of the preceding claims, **characterised in that** the transfer case (25) for transmitting power from the drive shaft (30) to the fluid pump(s) (17, 18, 19, 20) and/or the generator(s) is free from meshing gears.

11. Agricultural working machine according to one of the preceding claims, **characterised in that** one, several or all fluid pump(s) (17, 18, 19, 20) is/are designed as hydraulic pump(s).

12. Agricultural working machine according to one of the preceding claims, **characterised in that** the respective toothed belt (26, 27) consists of a heat-resistant material and/or has a heat-resistant coating.

13. Agricultural working machine according to one of the preceding claims, **characterised in that** a control device (37) is provided, which is configured to control and/or communicate with the at least one power consumer (6), with the fluid pump (17, 18, 19, 20) and/or generator associated with the respective power consumer (6) and/or with the drive (22).

14. Agricultural working machine according to one of the preceding claims, **characterised in that** the at least one power consumer (6) is selected from the group comprising
- a steering device (2) for steering the agricultural machine (1),
- a lifting device (3) for adjusting the height of a cutter bar (8) of a cutting unit (9) of the agricultural machine (1),
- a lifting device (4) for adjusting the height of a cutting unit (9) of the agricultural machine (1) and
- a sieving device (5) for separating grain and non-grain components of a crop flow within the agricultural machine (1).

## Revendications

1. Engin agricole, en particulier tracteur, moissonneuse-batteuse ou récolteuse-hacheuse, comprenant un système de consommateurs de puissance (7) comportant au moins un organe de travail (2, 3, 4, 5) et/ou au moins un outil attelé en tant que consommateurs de puissance (6), comprenant un système d'alimentation en énergie (16) comportant au moins une pompe à fluide (17, 18, 19, 20) et/ou au moins un générateur qui est associé(e) au consommateur de puissance (6) respectif et est configuré(e) en vue de l'alimentation en pression ou en courant de celui-ci, et comprenant un système d'entraînement (21) comportant un moyen d'entraînement (22) et un mécanisme de transmission (25) qui est monté à la suite du moyen d'entraînement (22), du point de vue de la technique d'entraînement, et transmet la puissance motrice, produite par le moyen d'entraînement, au moins en partie à la pompe à fluide (17, 18, 19, 20), au nombre d'au moins une, et/ou au générateur, au nombre d'au moins un,
**caractérisé en ce que**
le mécanisme de transmission (25) présente des courroies crantées (26, 27) destinées à la transmission de la puissance, sachant que plusieurs consommateurs de puissance (6) sont prévus et le mécanisme de transmission (25) transmet la puissance produite par le moyen d'entraînement (22) au moins en partie respectivement à au moins une des pompes à fluide (17, 18, 19, 20) et/ou un des générateurs, par l'intermédiaire d'au moins deux courroies crantées (26, 27) différentes.

2. Engin agricole selon la revendication 1, **caractérisé en ce que** plusieurs consommateurs de puissance (6) sont prévus, et le mécanisme de transmission (25) peut transmettre la puissance motrice, produite par le moyen d'entraînement (22), au moins en partie à au moins deux des pompes à fluide (17, 18, 19, 20) et/ou générateurs, par l'intermédiaire de la courroie crantée (26, 27) ou respectivement l'une des courroies crantées (26, 27).

3. Engin agricole selon la revendication 1 ou 2, **caractérisé en ce que** le mécanisme de transmission (25) est configuré pour entraîner les pompes à fluide (17, 18, 19, 20) et/ou les générateurs, au nombre d'au moins un(e), en même temps ou indépendamment les un(e)s des autres dans le temps.

4. Engin agricole selon l'une des revendications précédentes, **caractérisé en ce que** le moyen d'entraînement (22) présente un moteur d'entraînement (23) et un arbre d'entraînement (30) destinés à délivrer la puissance motrice totale au mécanisme de transmission (25).

5. Engin agricole selon l'une des revendications précédentes, **caractérisé en ce que** le moyen d'entraînement (22) présente un mécanisme intermédiaire (24) et/ou un amortisseur de vibrations qui ests intercalé entre le moteur d'entraînement (24) et l'arbre d'entraînement (30).

6. Engin agricole selon l'une des revendications précédentes, **caractérisé en ce que** le mécanisme de transmission (25) présente une poulie d'entraînement de courroie crantée (31, 32) pour chaque courroie crantée (26, 27), ou **en ce que** le mécanisme de transmission (25) présente une poulie d'entraînement de courroie crantée (31, 32) pour plusieurs courroies crantées (26, 27), la poulie d'entraînement de courroie crantée (31, 32) respective étant couplée de manière solidaire en rotation à l'arbre d'entraînement (30).

7. Engin agricole selon l'une des revendications précédentes, **caractérisé en ce que** le mécanisme de transmission (25) présente pour chaque pompe à fluide (17, 18, 19, 20) et/ou pour chaque générateur, un arbre de sortie (33, 34) actionnant celle-ci ou celui-ci, et au moins une poulie de sortie pour courroie crantée (35, 36) qui est couplée de manière solidaire en rotation à l'arbre de sortie (33, 34).

8. Engin agricole selon l'une des revendications précédentes, **caractérisé en ce que** l'arbre d'entraînement (30) permet d'entraîner plusieurs arbres de sortie (33, 34) et/ou pompes à fluide (17, 18, 19, 20) et/ou générateurs.

9. Engin agricole selon l'une des revendications précédentes, **caractérisé en ce qu'**au moins deux des poulies de courroie crantée (31, 32), qui sont couplées de manière solidaire en rotation à l'arbre d'entraînement (30), et/ou au moins deux des poulies de courroie crantée (35, 36) qui sont couplées à l'arbre de sortie ou aux arbres de sortie (33, 34), présentent des diamètres différents.

10. Engin agricole selon l'une des revendications précédentes, **caractérisé en ce que** le mécanisme de transmission (25) destiné à la transmission de puissance de l'arbre d'entraînement (30) à la ou aux pompe(s) à fluide (17, 18, 19, 20) et/ou au(x) générateur(s) est dépourvu de roues dentées engrenant les unes avec les autres.

11. Engin agricole selon l'une des revendications précédentes, **caractérisé en ce qu'**une, plusieurs ou toutes les pompes à fluide (17, 18, 19, 20) est/sont réalisée(s) sous forme de pompe(s) hydraulique(s).

12. Engin agricole selon l'une des revendications précédentes, **caractérisé en ce que** la courroie crantée (26, 27) respective est constituée d'un matériau résistant à la chaleur et/ou présente un revêtement résistant à la chaleur.

13. Engin agricole selon l'une des revendications précédentes, **caractérisé en ce qu'**il est prévu un dispositif de commande (37) qui est configuré pour commander et/ou pour communiquer avec le consommateur de puissance (6), au nombre d'au moins un, avec la pompe à fluide (17, 18, 19, 20) et/ou le générateur associé(e) au consommateur de puissance (6) respectif et/ou avec le moyen d'entraînement (22).

14. Engin agricole selon l'une des revendications précédentes, **caractérisé en ce que** le consommateur de puissance (6), au nombre d'au moins un, est choisi dans le groupe comprenant
- un dispositif de direction (2) destiné à diriger l'engin agricole (1),
- un dispositif de levage (3) destiné au réglage en hauteur d'une barre porte-lames (8) d'un mécanisme de coupe (9) de l'engin agricole (1),
- un dispositif de levage (4) destiné au réglage en hauteur d'un mécanisme de coupe (9) de l'engin agricole (1), et
un dispositif de tamisage (5) destiné à séparer les constituants grains et les constituants non-grains d'un flux de produits de récolte, à l'intérieur de l'engin agricole (1).
